# EUROPÄISCHE PATENTSCHRIFT

(11) **EP 1 593 721 B1**
(45) Veröffentlichungstag und Bekanntmachung des Hinweises auf die Patenterteilung: **03.06.2009**
(21) Anmeldenummer: 05009327.7
(22) Anmeldetag: 28.04.2005
(51) Int. Cl.: C09D 131/02, C09D 5/03, C04B 24/26

(54) **Verwendung von mit Schutzkolloid stabilisierten Mischpolymerisaten in zementfreien Beschichtungsmitteln**
Use of copolymers stabilised with protective colloids in cementless coating compositions
Utilisation de copolymères, stabilisés par des colloides protecteurs, dans des produits de revêtement exempts de ciment

(30) Priorität: 06.05.2004 DE 102004022405
(43) Veröffentlichungstag der Anmeldung: 09.11.2005
(73) Patentinhaber: Wacker Chemie AG, 81737 München (DE)
(72) Erfinder: Bacher, Andreas, Dr., 84489 Burghausen (DE); Weitzel, Hans-Peter, Dr., 84571 Reischach (DE); Jodlbauer, Franz, 84533 Marktl (DE); Zeh, Harald, Dr., 84489 Burghausen (DE)
(74) Vertreter: Schuderer, Michael

(56) Entgegenhaltungen:
- EP-A- 0 527 322
- WO-A-97/44289
- GB-A- 1 086 036
- DATABASE WPI Section Ch, Week 198242 Derwent Publications Ltd., London, GB; Class A14, AN 1982-89255E XP002335715 -& JP 57 147564 A (KURARAY CO LTD) 11. September 1982 (1982-09-11)
- DATABASE CA [Online] CHEMICAL ABSTRACTS SERVICE, COLUMBUS, OHIO, US; XP002335713 gefunden im STN Database accession no. 111:159289 & JP 01 126251 A2 (SUMITOMO CHEMICAL CO., LTD., JAPAN) 18. Mai 1989 (1989-05-18)

## Beschreibung

Die Erfindung betrifft die Verwendung von mit Schutzkolloid stabilisierten Mischpolymerisaten, in Form deren in Wasser redispergierbaren Polymerpulver oder in Form deren wässrigen Polymerdispersionen, in Beschichtungsmitteln, welche keine mineralischen Bindemittel enthalten, insbesondere in Farben, Putzen und Armierungsputzen.

Die EP 0 513 889 A1 beschreibt mit Schutzkolloid stabilisierte Mischpolymerisate von einem Vinylester von verzweigten, tertiären Carbonsäuren mit 10 C-Atomen, Vinylpivalat und Vinylacetat als Bindemittel in Beschichtungsmitteln. Aus der EP 0 516 201 A1 sind mit Emulgator stabilisierte Mischpolymerisate von Vinylpivalat (VeoVa 5), einem Vinylester von verzweigten, tertiären Carbonsäuren mit 10 C-Atomen (VeoVa 10) und Vinylacetat bekannt, welche in Beschichtungsmitteln eingesetzt werden. Emulgatorstabilisierte Vinylacetat/Ethylen/Vinylpivalat-Mischpolymerisate als Bindemittel für Beschichtungsmittel sind aus der EP 0 518 406 A1 bekannt. Aus der EP 0 902 769 B1 ist bekannt, Mischpolymerisate von Vinylacetat, Ethylen, und von Vinylestern von verzweigten, tertiären Carbonsäuren mit 5 bis 11 C-Atomen als Additive zur Verbesserung der Dehnfähigkeit von Baustoffmassen auf der Basis von mineralischen Bindemitteln, insbesondere von Dichtungsschlämmen, einzusetzen. Der Gegenstand der EP 0 527 322 A1 sind Ethylen-Vinylacetat-Vinylpivalat-Terpolymerisate, welche als Bindemittel in Farben und zementären Zusammensetzungen eingesetzt werden. Deren Herstellung erfolgt aber generell in Gegenwart von Emulgator. Ohne Emulgatorzusatz stabilisierte Mischpolymerisate und deren Verwendung in Beschichtungsmitteln, welche keine mineralischen Bindemittel enthalten, sind darin nicht beschrieben.

Der vorliegenden Erfindung lag die Aufgabe zugrunde, Beschichtungsmittel zur Verfügung zu stellen, welche auch ohne den Zusatz von Zement, zu Beschichtungen (Farben, Putzen) mit hoher mechanischer Festigkeit und hoher Wasserfestigkeit führen.

Gegenstand der Erfindung ist die Verwendung von mit Schutzkolloid stabilisierten Mischpolymerisaten, in Form deren in Wasser redispergierbaren Polymerpulver oder in Form deren wässrigen Polymerdispersionen, in Beschichtungsmitteln, welche keine mineralischen Bindemittel enthalten, dadurch gekennzeichnet, dass das Mischpolymerisat erhältlich ist durch radikalisch initiierte Polymerisation in Wasser, ohne Emulgatorzusatz, von
a) mindestens 35 Gew.-% Vinylacetat,
b) 5 bis 20 Gew.-% Ethylen,
c) mindestens 40 Gew.-% Vinylester von alpha-verzweigten, tertiären Monocarbonsäuren mit 5 bis 15 C-Atomen, sowie gegebenenfalls
d) 0.1 bis 10 Gew.-% weiterer copolymerisierbarer, ethylenisch ungesättigter Comonomere, wobei sich die Angaben in Gew.-% auf jeweils 100 Gew.-% aufaddieren.

Vorzugsweise enthalten die Mischpolymerisate 40 bis 50 Gew.-%, besonders bevorzugt 45 bis 50 Gew.-%, Vinylacetat-Einheiten, 5 bis 15 Gew.-% Ethylen-Einheiten und 40 bis 50 Gew.-%, besonders bevorzugt 45 bis 50 Gew.-%, Einheiten von Vinylestern von alpha-verzweigten, tertiären Monocarbonsäuren mit 5 bis 15 C-Atomen.
Bevorzugt sind Vinylester c) von alpha-verzweigten, tertiären Monocarbonsäuren mit 9 bis 15 C-Atomen, besonders bevorzugt von alpha-verzweigten, tertiären Monocarbonsäuren mit 10 C-Atomen, beispielsweise VeoVa 10 (Handelsname der Polymer Solutions).

Geeignete Comonomere d) sind ethylenisch ungesättigte Mono-und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise N-Methylolacrylamid (NMA), N-Methylolmethacrylamid, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane.

Im allgemeinen beträgt die Glasübergangstemperatur Tg der Mischpolymerisate von -10°C bis 15°C.

Die Herstellung der Mischpolymerisate erfolgt nach dem Emulsionspolymerisationsverfahren oder nach dem Suspensionspolymerisationsverfahren in Gegenwart von Schutzkolloiden, vorzugsweise nach dem Emulsionspolymerisationsverfahren, wobei die Polymerisationstemperatur im allgemeinen 40°C bis 100°C, vorzugsweise 60°C bis 90°C beträgt, und bei einem Druck zwischen 5 bar und 100 bar gearbeitet wird. Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind Natriumpersulfat, Wasserstoffperoxid, Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im allgemeinen in einer Menge von 0.01 bis 0.5 Gew.-%, bezogen auf das Gesamtgewicht der Monomere, eingesetzt. Als Redox-Initiatoren verwendet man Kombinationen aus den genannten Initiatoren in Kombination mit Reduktionsmitteln. Geeignete Reduktionsmittel sind beispielsweise Natriumsulfit, Natriumhydroxymethansulfinat und Ascorbinsäure. Die Reduktionsmittelmenge beträgt vorzugsweise 0.01 bis 0.5 Gew.- %, bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Geeignete Schutzkolloide sind teilverseifte oder vollverseifte Polyvinylalkohole; Polyvinylpyrrolidone; Polyvinylacetale; Polysaccharide in wasserlöslicher Form wie Stärken (Amylose und Amylopectin), Cellulosen und deren Carboxymethyl-, Methyl- , Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden teilverseifte oder vollverseifte Polyvinylalkohole. Besonders bevorzugt sind teilverseifte Polyvinylalkohole mit einem Hydrolysegrad von 80 bis 95 Mol-% und einer Höpplerviskosität in 4 %-iger wässriger Lösung von 1 bis 30 mPas (Methode nach Höppler bei 20°C, DIN 53015).

Es wird ohne Emulgatorzusatz polymerisiert.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Die damit erhältlichen wässrigen Dispersionen haben einen Feststoffgehalt von 30 bis 75 Gew.-%, vorzugsweise von 50 bis 60 Gew.-%.

Zur Herstellung der in Wasser redispergierbaren Polymerpulver-Zusammensetzungen werden die wässrigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird die Verdüsungshilfe in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll mindestens 3 bis 30 Gew.-%, bezogen auf den Polymeranteil betragen; bevorzugt werden 5 bis 20 Gew.-% bezogen auf den Polymeranteil eingesetzt.

Geeignete Verdüsungshilfen sind beispielsweise die bereits genannten Schutzkolloide. Bevorzugt werden keine weiteren Schutzkolloide als Polyvinylalkohole als Verdüsungshilfe eingesetzt.

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 *µ*m.

Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

Die in Wasser redispergierbaren Polymerpulver und die wässrigen Polymerdispersionen werden in zementfreien, Beschichtungsmitteln, insbesondere in Farben, Putzen und Armierungsputzen verwendet.

Zur Herstellung der Beschichtungsmittel wird die Polymerdispersion bzw. das Polymerpulver mit den weiteren Rezepturbestandteilen wie Füllstoff, Pigment und weiteren Zuschlägen in geeigneten Mischern gemischt und homogenisiert. Das Dispersionspulver kann gegebenenfalls auch in Form einer wässrigen Redispersion auf der Baustelle zugegeben werden. Vorzugsweise wird eine Trockenmischung hergestellt und das zur Verarbeitung erforderliche Wasser unmittelbar vor der Verarbeitung hinzugefügt.

Die Schutzkolloid-stabilisierten Mischpolymerisate eignen sich zur Verwendung in zementfreien Rezepturen. Typische Rezepturen enthalten 5 bis 95 Gew.-%, vorzugsweise 70 bis 95 Gew.-%, Füllstoffe wie Quarzsand, Calciumcarbonat oder Talkum, 0.1 bis 2 Gew.-% Verdickungsmittel wie Celluloseether, Schichtsilikate, Polyacrylate, 0.1 bis 60 Gew.-%, vorzugsweise 4 bis 40 Gew.-%, der Schutzkolloid-stabilisierten Mischpolymerisate in Form der Polymerdispersion bzw. des Polymerpulvers und gegebenenfalls weitere Additive zur Verbesserung von Standfestigkeit, Verarbeitbarkeit, offener Zeit und Wasserfestigkeit. Die Angaben in Gew.-% beziehen sich dabei immer auf 100 Gew.-% Trockenmasse der Rezeptur.

Die nachfolgenden Beispiele dienen zur weiteren Erläuterung der Erfindung:

### Beispiel 1:

### Herstellung der Dispersion:

In einen 600 1 Autoklaven wurden 104 kg deionisiertes Wasser, 101 kg einer 20 %-igen wässrigen Lösung eines Polyvinylalkohols mit einem Hydrolysegrad von 88 Mol-% und einer Viskosität nach Höppler von 4 mPas sowie 71.1 kg Vinylacetat und 71.1 kg VeoVa 10 vorgelegt. Der pH-Wert wurde mit Ameisensäure auf 4.0 eingestellt und der Autoklav evakuiert. Anschließend wurden bei 55°C 26 bar Ethylen aufgedrückt, was einer Ethylenmenge von 19 kg entspricht.
Zum Starten der Polymerisation wurden die Initiatordosierungen, 3 %-ige wässrige tert.-Butylhydroperoxid-Lösung und 5 %- ige wässrige Brüggolit-Lösung, mit je 1740 g/h dosiert. Die Innentemperatur wurde durch externe Kühlung auf 75°C begrenzt. 35 Minuten nach Reaktionsbeginn wurde der Ethylendruck auf 35 bar erhöht und mit der Dosierung von Vinylacetat und VeoVa 10 begonnen. 47.4 kg Vinylacetat und 47.4 kg VeoVa 10 wurden mit einer Rate von je 19.0 kg/h dosiert. Zeitgleich wurden 28.4 kg einer 12.3 %-igen wässrigen Lösung eines Polyvinylalkohols mit einem Hydrolysegrad von 88 Mol-% und einer Viskosität nach Höppler von 4 mPas mit einer Rate vom 11.4 kg/h nachdosiert. Ethylen wurde bis zu einer Menge von 28 kg nachdosiert. Nach Beendigung der Reaktion wurde gekühlt, überschüssiges Ethylen entspannt und das Polymerisat zur Entfernung von Restmonomer nachpolymerisiert. Zur Nachpolymerisation wurden nacheinander 1000 g tert.-Butylhydroperoxid, als 10 %-ige wässrige Lösung, und 1600 g Brüggolit, als 5 %-ige wässrige Lösung, zugegeben.

Anschließend wurde die Dispersion über ein 500 *µ*m Sieb abgefüllt.
Es wurde eine Dispersion mit folgenden Kenndaten erhalten:
Mischpolymerisat aus 45 Gew.-% Vinylacetat, 45 Gew.-% VeoVa10, 10 Gew.-% Ethylen.

| | |
|---|---|
| Feststoffgehalt | 55.1 % |
| Viskosität (Brookfield 20Upm) | 1530 mPas |
| pH | 3.9 |
| Mindestfilmbildetemperatur | 0°C |
| Tg | -1°C |

### Pulverherstellung:

Die Dispersion wurde mit 1 Gew.-% (fest/fest) Polyvinylalkohol mit einem Hydrolysegrad von 88 Mol-% und einer Viskosität nach Höppler von 4 mPas und mit 3 Gew.-% (fest/fest) Polyvinylalkohol mit einem Hydrolysegrad von 88 Mol-% und einer Viskosität nach Höppler von 13 mPas versetzt und mit Wasser auf eine Verdüsungsviskosität von 250 mPas verdünnt. Die Dispersion wurde dann mittels Zweistoffdüse versprüht. Als Verdüsungskomponente diente auf 4 bar vorgepreßte Luft, die gebildeten Tropfen wurden mit auf 125°C erhitzter Luft im Gleichstrom getrocknet. Das erhaltene trockene Pulver wurde mit 10 Gew.-% handelsüblichem Antiblockmittel (Kaolin) versetzt.

### Vergleichsbeispiel 1:

Analog der Vorgehensweise in Beispiel 1 wurde ein mit Polyvinylalkohol stabilisiertes Redispersionspulver hergestellt auf Basis eines Mischpolymerisats mit 70 Gew.-% Vinylacetat, 15 Gew.-% Ethylen und 15 Gew.-% VeoVa10.

### Ausprüfung:

Die Mischpolymerisate wurden in Form deren in Wasser redispergierbaren Polymerpulver in folgender Trockenmörtel-Rezeptur eingesetzt.

### Rezeptur:

| | |
|---|---|
| 387.0 Gew.-Teile | Calciumcarbonat (Omyacarb 130 GU) |
| 45.0 Gew.-Teile | Calciumcarbonat (Omyacarb 5 GU) |
| 380.0 Gew.-Teile | Sand (Calcilit 0.1 - 0.5) |
| 50.0 Gew.-Teile | Sand (Quarzsand Nr .12) |
| 40.0 Gew.-Teile | Dispersionspulver (Bsp.1 oder V.bsp. 1) |
| 30.0 Gew.-Teile | Pigment (Kronos 2059) |
| 4.5 Gew.-Teile | Entschäumer (Agitan P 801) |
| 2.5 Gew.-Teile | Cellulosefaser (Arbocel BC 1000) |
| 1.0 Gew.-Teile | Celluloseether (Walocel MW 40000 PFV 50) |
| 5.0 Gew.-Teile | Bentonit (Bentone EW) |

Die pulverförmige Mischung, wurde mit Wasser zu einer pastösen Masse angerührt und mit Hilfe einer Schablone 3 mm dick auf eine 6 cm dicke Polystyrolschaumplatte vom Typ EPS 15 B1 in einer Fläche von 5 x 5 cm² aufgespachtelt. Nach einer Trockenzeit von 25 Tagen bei Normklima wurde mit Hilfe eines Reaktionsharzklebers ein plattenförmiger Zuganker auf den beschichteten Teil der Polystyrolschaumplatte aufgeklebt und am 26. Tag der Prüfkörper mit der beschichteten Seite nach unten in Wasser gelegt.
Nach genau 48 Stunden wurde der Prüfkörper aus dem Wasser genommen und sofort mit dem Herion-Gerät die Haftzugfestigkeit in N/mm² bestimmt. Außerdem wurde festgestellt, ob bei diesem Zugversuch auch ein Ausriß in der Polystyrolschaumplatte stattgefunden hat, was bedeuten würde, dass die Haftzugfestigkeit in diesem Bereich höher ist als die Festigkeit der Polystyrolschaumplatte. Dieser Ausriß wurde in % der Gesamtfläche angegeben.
Sowohl der Haftzugwert, gemessen in N/mm² , als auch der Ausriß im Untergrund dienen zur Beurteilung der Haftung.

Die Ergebnisse sind in Tabelle 1 zusammengefasst.

**Tabelle 1:**

| | Beispiel 1 | Vergleichsbeispiel 1 |
|---|---|---|
| Haftzugprüfung [N/mm²] | 0.1 | 0.04 |
| Polystyrol-Ausriss [%] | 74 | 0 |

## Patentansprüche

1. Verwendung von mit Schutzkolloid stabilisierten Mischpolymerisaten, in Form deren in Wasser redispergierbaren Polymerpulver oder in Form deren wässrigen Polymerdispersionen, in Beschichtungsmitteln, welche keine mineralischen Bindemittel enthalten, **dadurch gekennzeichnet, dass** das Mischpolymerisat erhältlich ist durch radikalisch initiierte Polymerisation in Wasser, ohne Emulgator zusatz, von
a) mindestens 35 Gew.-% Vinylacetat,
b) 5 bis 20 Gew.-% Ethylen,
c) mindestens 40 Gew.-% Vinylester von alpha-verzweigten, tertiären Monocarbonsäuren mit 5 bis 15 C-Atomen, sowie gegebenenfalls
d) 0.1 bis 10 Gew.-% weiterer copolymerisierbarer, ethylenisch ungesättigter Comonomere,
wobei sich die Angaben in Gew.-% auf jeweils 100 Gew.-% aufaddieren.

2. Verwendung nach Anspruch 1, **dadurch gekennzeichnet, dass** die Mischpolymerisate 40 bis 50 Gew.-% Vinylacetat-Einheiten, 5 bis 15 Gew.-% Ethylen-Einheiten und 40 bis 50 Gew.-% Einheiten Vinylester von alpha-verzweigten, tertiären Monocarbonsäuren mit 5 bis 15 C-Atomen enthalten.

3. Verwendung nach Anspruch 1 bis 2, **dadurch gekennzeichnet, dass** als Schutzkolloid teilverseifte Polyvinylalkohole mit einem Hydrolysegrad von 80 bis 95 Mol-% und einer Höpplerviskosität in 4 %-iger wässriger Lösung von 1 bis 30 mPas eingesetzt werden.

4. Verwendung nach Anspruch 1 bis 3 in Farben, Putzen und Armierungsputzen:

## Claims

1. Use of copolymers stabilized with a protective colloid, in the form of their polymer powders redispersible in water or in the form of their aqueous polymer dispersions, in coating materials which contain no mineral binders, **characterized in that** the copolymer is obtainable by free radical polymerization, in water, without addition of emulsifier, of
a) at least 35% by weight of vinyl acetate,
b) from 5 to 20% by weight of ethylene,
c) at least 40% by weight of vinyl esters of alpha-branched, tertiary monocarboxylic acids having 5 to 15 carbon atoms and optionally
d) from 0.1 to 10% by weight of further copolymerizable, ethylenically unsaturated comonomers,
the data in % by weight summing in each case to 100% by weight.

2. Use according to Claim 1, **characterized in that** the copolymers contain from 40 to 50% by weight of vinyl acetate units, from 5 to 15% by weight of ethylene units and from 40 to 50% by weight of units of vinyl esters of alpha-branched, tertiary monocarboxylic acids having 5 to 15 carbon atoms.

3. Use according to Claim 1 or 2, **characterized in that** partly hydrolyzed polyvinyl alcohols having a degree of hydrolysis of from 80 to 95 mol% and a Höppler viscosity, in 4% strength aqueous solution, of from 1 to 30 mPa.s are used as the protective colloid.

4. Use according to any of Claims 1 to 3 in paints, renders and reinforcing renders.

## Revendications

1. Utilisation, dans des produits de revêtement exempts de liants minéraux, de copolymères stabilisés avec un colloïde de protection et se présentant sous forme de leurs polymères en poudre redispersables dans l'eau ou de leurs dispersions aqueuses de polymères, **caractérisée en ce que** le copolymère peut être obtenu par une polymérisation à l'initiation radicalaire mettant en oeuvre, dans de l'eau sans ajout d'émulsifiant,
a) au moins 35 % en poids d'acétate de vinyle,
b) 5 à 20 % en poids d'éthylène,
c) au moins 40 % en poids d'esters vinyliques d'acides monocarboxyliques tertiaires alpha-ramifiés renfermant 5 à 15 atomes de C ainsi que, le cas échéant,
d) 0,1 à 10 % en poids d'autres comonomères éthyléniquement insaturés qui sont aptes à la copolymérisation,
la somme des indications en % en poids étant dans chaque cas égale à 100 %.

2. Utilisation selon la revendication 1, **caractérisée en ce que** les copolymères contiennent 40 à 50 % en poids d'unités d'acétate de vinyle, 5 à 15 % en poids d'unités d'éthylène et 40 à 50 % en poids d'unités d'esters vinyliques d'acides monocarboxyliques tertiaires alpha-ramifiés renfermant 5 à 15 atomes de C.

3. Utilisation selon les revendications 1 à 2, **caractérisée en ce que** l'on met en oeuvre, en tant que colloïde de protection, des alcools polyvinyliques partiellement saponifiés présentant un degré d'hydrolyse compris entre 80 et 95 % molaires et une viscosité Höppler, à 4 % en solution aqueuse, comprise entre 1 et 30 mPas.

4. Utilisation selon les revendications 1 à 3 dans des peintures, des crépis et des crépis sur armature.
